(19) **Europäisches Patentamt**

**European Patent Office**

**Office européen des brevets**

(11) **EP 1 420 388 B1**

(12) **EUROPEAN PATENT SPECIFICATION**

(45) Date of publication and mention
of the grant of the patent:
**29.11.2006 Bulletin 2006/48**

(51) Int Cl.:
*G10H 1/00* (2006.01)     *G10H 1/36* (2006.01)
*G06F 17/30* (2006.01)

(21) Application number: **03256734.9**

(22) Date of filing: **24.10.2003**

(54) **Music searching method, music searching device, and music searching program**

Musiksuchverfahren, Musiksuchgerät und Musiksuchprogramm

Méthode de recherche de musique, dispositif de recherche de musique et programme de recherche de musique

(84) Designated Contracting States:
**DE FR GB**

(30) Priority: **18.11.2002 JP 2002333325**

(43) Date of publication of application:
**19.05.2004 Bulletin 2004/21**

(73) Proprietor: **Pioneer Corporation**
**Meguro-ku,**
**Tokyo (JP)**

(72) Inventors:
• **Yasushi, Mitsuo,**
**c/o Pioneer Corporation**
**Tsurugashima-shi**
**Saitama (JP)**

• **Yanagidaira, Masatoshi,**
**c/o Pioneer Corporation**
**Tsurugashima-shi**
**Saitama (JP)**

(74) Representative: **Haley, Stephen**
**Gill Jennings & Every LLP**
**Broadgate House**
**7 Eldon Street**
**London EC2M 7LH (GB)**

(56) References cited:
| | |
|---|---|
| EP-A- 1 241 588 | EP-A- 1 244 033 |
| WO-A-01/69575 | WO-A-02/17146 |
| US-A- 5 963 957 | US-A1- 2002 103 796 |
| US-B1- 6 192 340 | |

**Description**

The present invention relates to a music searching method, a music searching device and a music searching program for selecting a piece of music that a user desires to listen.

In recent years, music searching technologies that search for a piece of music, which a user desires to listen, have been proposed. As a conventional music searching device, the device described in JP-A-2001-282847 presents pieces of music to match the mood (sensibility) of the user. This device measures the sensibility of the user and presents pieces of music using a parameter representing the user s sensibility as desires to listen, on the basis of subjective impressions with respect to pieces of music.

However, because there are personal differences in music preferences, it is not always the case that pieces of music searched for on the basis of sensibility or impressions match the piece of music, which the user desires to listen. Also, even if the sensibilities or impressions are the same, the music that the user desires to listen will differ depending on the place where the music is to be listened. For example, in a bedroom, a drowsy user might desire to listen music that induces sleep. However, while driving, a drowsy user might desire to listen music that will rouse the user. Also, when searching for music that another person riding with the user desires to listen, it is necessary to appropriately select the sensibility or impressions of that other person, and it is difficult to search for the music that the fellow passenger desires to listen.

Also, when the user has listened music selected on the basis of sensibility or impressions numerous times in the past, the effect of rousing the user while driving is slight due to the user s familiarity with the music. In this case, the user desires to listen music that the user has not listened many times before. When searching for music that children like while the user is riding with the user's family, the user desires music that the children have listened many times before because children listen to pieces of music that they like many times.

In this manner, the problems arise that the preferences of the user cannot be precisely reflected simply by searching for music on the basis of sensibility or impressions, and, depending on the environment in which the music is to be listened, it is not always the case that the searched-for music matches the music that the user desires to listen because consideration is not given to the number of times that the user has listened the music. Examples of prior art devices and methods can be found disclosed in WO-A-0217146 and US-A-5963957.

In order to solve the problems of the prior art, the present invention provides a music searching method for searching, in a music database, a piece of music which a user desires to listen to, the music searching method comprises the steps of:

comparing, on the basis of a degree of similarity in the rates of change of the beat cycles and beat intensities, representative music, which the user has set and serves as the basis for the search, with a plurality of pieces of music, which are search targets; selecting, on the basis of the comparison results, a plurality of pieces of music having a high degree of similarity,
the method characterized by further comprising the step of:

sorting the pieces of selected music based on stimulation coefficients calculated by dividing the degree of similarities of the pieces of selected music by the frequency of play of the pieces of selected music.

Preferably, the selected piece of music is a plurality of pieces of music and the music searching method further comprises the steps of:

referencing played frequencies, which are associated the selected pieces of music, respectively; and sorting, on the basis of the played frequencies, the selected pieces of music in ascending order or descending order.

The music searching method may further comprise the steps of:

updating the played frequencies each time a piece of music is played; and sorting, on the basis of the updated played frequencies, the selected pieces of music in ascending order or descending order.

The music searching method may further comprise the steps of:

updating the played frequencies each time a piece of music is skipped; and sorting, on the basis of the updated played frequencies, the selected pieces of music in ascending order or descending order.

Preferably, the music searching method further comprises the step of:

sorting, on the basis of environment in which the pieces of music are played, the selected pieces of music in ascending order or descending order.

Preferably, the music searching method further comprises the step of:

acquiring, from a multi-channel digital broadcast, the pieces of music that serve as search targets.

The present invention further provides a music searching device for searching, in a music database, a piece of music which a user desires to listen to, the music searching device comprising:

comparing means arranged to compare, on the basis of a degree of similarity in the rates of change of the beat cycles and beat intensities, representative music, which the user has set and serves as the basis for the search, with a plurality of pieces of music, which are search targets;

selecting means arranged to select, on the basis of the comparison results, a plurality of pieces of music having a high degree of similarity; and, the music searching device characterized by further comprising:

sorting means arranged to sort the pieces of music selected by the selecting means based on stimulation coefficients calculated by dividing the degree of similarities of the pieces of selected music by the frequency of play of the pieces of the pieces of selected music.

The present invention further provides a music searching computer program which searches for, in a music database, a piece of music which a user desires to listen to, the music searching computer program causing a computer to perform a process comprising the steps of:

comparing, on the basis of a degree of similarity in the rates of change of the beat cycles and beat intensities, representative music, which the user has set and serves as the basis for the search, with a plurality of pieces of music, which are search targets; selecting, on the basis of the comparison results, a plurality of pieces of music having a high degree of similarity,

the method characterized by further comprising the step of:

sorting the pieces of selected music based on stimulation coefficients calculated by dividing the degree of similarities of the pieces of selected music by the frequency of play of the pieces of selected music.

Preferably, the stimulation coefficient of a piece of music is calculated using the following equation:

$$ ST = \frac{R}{(1+n)} , $$

where ST represents the stimulation coefficient, R represents the degree of similarity and n represents the played frequency.

In the Drawings:

Fig. 1 is a diagram showing the configuration of a music searching device in a first embodiment of the invention.

Fig. 2 is a diagram showing the configuration of an operation panel of an operation unit of the music searching device in the first embodiment of the invention.

Fig. 3 is a flow chart showing the flow of a panel operation of the music searching device in the first embodiment of the invention.

Fig. 4 is a flow chart showing the flow of a music setting operation of the music searching device in the first embodiment of the invention.

Figs. 5A and 5B are charts showing an example where extracted pieces of music are sorted in an order of high played frequencies.

Figs. 6A and 6B are charts showing an example where extracted pieces of music are sorted in an order of preference coefficients.

Figs. 7A and 7B are charts showing an example where extracted pieces of music are sorted in an order of low played frequencies.

Figs. 8A and 8B are charts showing an example where extracted pieces of music are sorted in an order of stimulation coefficients.

Fig. 9 is a flow chart showing the flow of a music playing operation of the music searching device in the first embodiment of the invention.

Figs. 10A and 10B are charts showing an example where, when pieces of music are played using a list where the pieces of music are sorted in accordance with their preference coefficients, the ranks of the pieces of music are changed before and after playing.

Figs. 11A and 11B are charts showing an example where, when pieces of music are played using a list where the pieces of music are sorted in accordance with their stimulation coefficients, the ranks of the pieces of music are changed before and after playing.

Fig. 12 is a diagram showing the configuration of a music searching device in a second embodiment of the invention.

Fig. 13 is a diagram showing the configuration of an operation panel of an operation unit of the music searching device in the second embodiment of the invention.

Fig. 14 is a flow chart showing the flow of a music playing operation of the music searching device in the second embodiment of the invention.

Fig. 15 is a diagram showing the configuration of a music searching device in a third embodiment of the invention.

Fig. 16 is a flow chart showing the flow of a music playing operation of the music searching device in the third embodiment of the invention.

Embodiments of the invention will be described below with reference to the drawings.

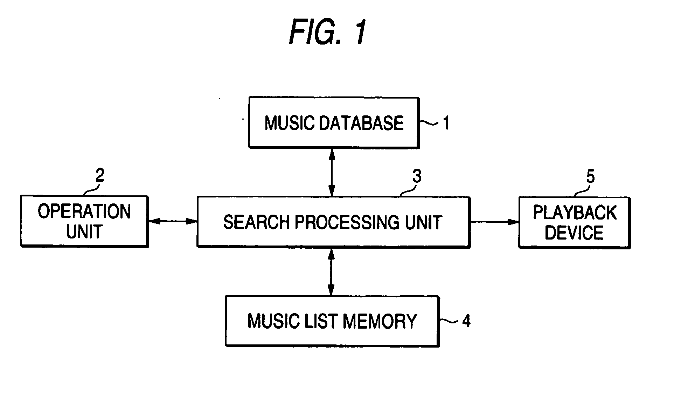

Fig. 1 is a block diagram showing the configuration of a music searching device of a first embodiment of the invention. The music searching device includes a music database 1, an operation unit 2, a search processing unit 3, a music list memory 4 and a playback device 5.

The music database 1 associates and stores music data of pieces of music with music-data search information representing musical characteristics of the pieces of music and the numbers of times that the pieces of music have been played (hereinafter, referred to as "played frequencies"). Also, bibliographic information of the pieces of music, including titles and singer names, and the number of times each music has been played are also associated with the music data and stored in the music database 1. The music database 1 is configured by a large-capacity storage recording medium such as a hard disk or the like.

The operation unit 2 selects a representative music serving as the search criterion when the music database 1 is searched for a piece of music that the user wants to listen, and is configured by buttons for instructing to play back the music data.

The search processing unit 3 is a processing unit that extracts, on the basis of the musical characteristics of the selected representative music, music data of similar pieces of music to generate a play list, and is implemented by the control of a computer.

The music list memory 4 is a memory for storing the music play list generated by the search processing unit 3.

The playback device 5 is a block that acquires, in accordance with the play list stored in the music list memory 4, music data of corresponding pieces of music from the music database 1 and plays music.

It is not essentially necessary for the music database 1 to be in the music searching device. The music database may also be disposed in a remote server device, and the acquisition of the music data and the updating of related data content may be conducted by communication.

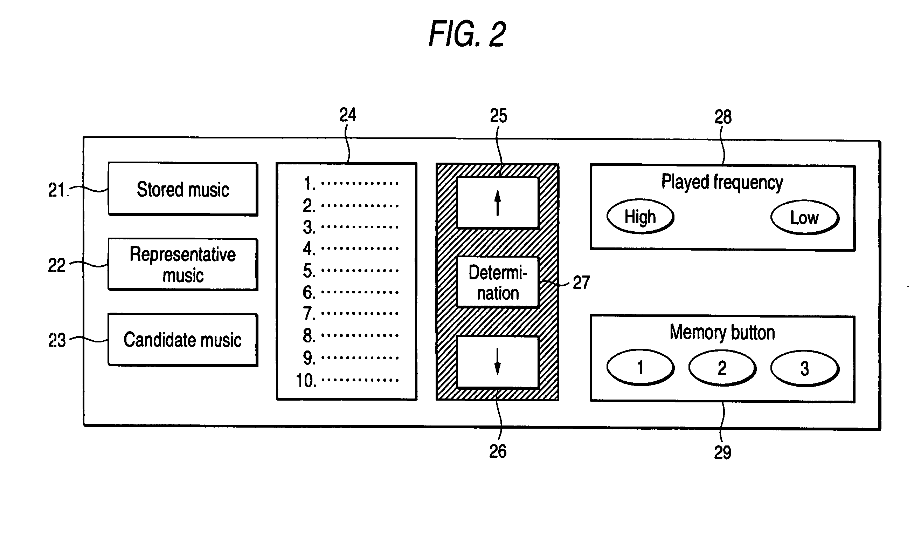

Fig. 2 is a diagram showing the configuration of an operation panel of the operation unit 2 of the music searching device. Disposed on the operation panel are a stored music button 21, a representative music button 22, a candidate music button 23, a title display area 24, an up-arrow key 25, a down-arrow key 26, a decision button 27, played frequency buttons 28 and memory buttons 29, so that various kinds of input and selection can be conducted.

The stored music button 21 displays, in the title display area 24, the titles of all pieces of music stored in the music database 1. The representative music button 22 displays, in the title display area 24, the title of the representative music that the user has selected. The candidate music button 23 displays, in the title display area 24, the titles of similar pieces of music searched for on the basis of the representative music. The up-arrow key 25 and the down-arrow key 26 move a cursor of the title display area 24 up and down, respectively. The decision button 27 determines the selection of the title on which the cursor is positioned.

The played frequency buttons 28 sort the titles of the pieces of music displayed in the title display area 24 and display them in the order of high played frequencies or low played frequencies. The memory buttons 29 store the list of similar pieces of music (i.e., candidate music) extracted by the search and conduct playing of the music data in accordance with the stored list. Different lists can be stored in three buttons 1 to 3.

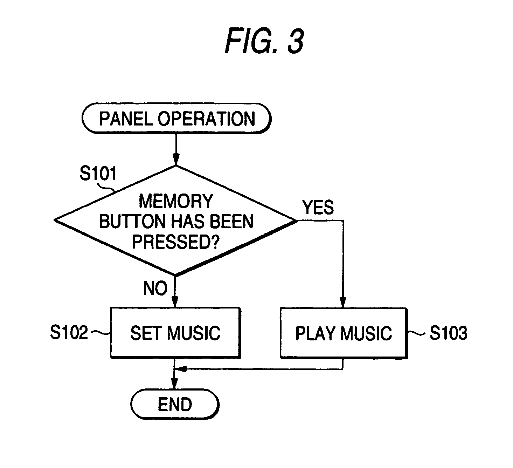

Fig. 3 is a flow chart showing the flow of a panel operation of the music searching device. First, it is determined whether or not one of the memory buttons 29 has been pressed (step S101). When a button other than one of the memory buttons 29 has been pressed, it is determined that the operation is for generating the play list, and a music setting operation is conducted (step S102). When one of the memory buttons 29 has been pressed, it is determined that the operation is for playing music on the basis of the play list, and a music playing operation is conducted (step S103).

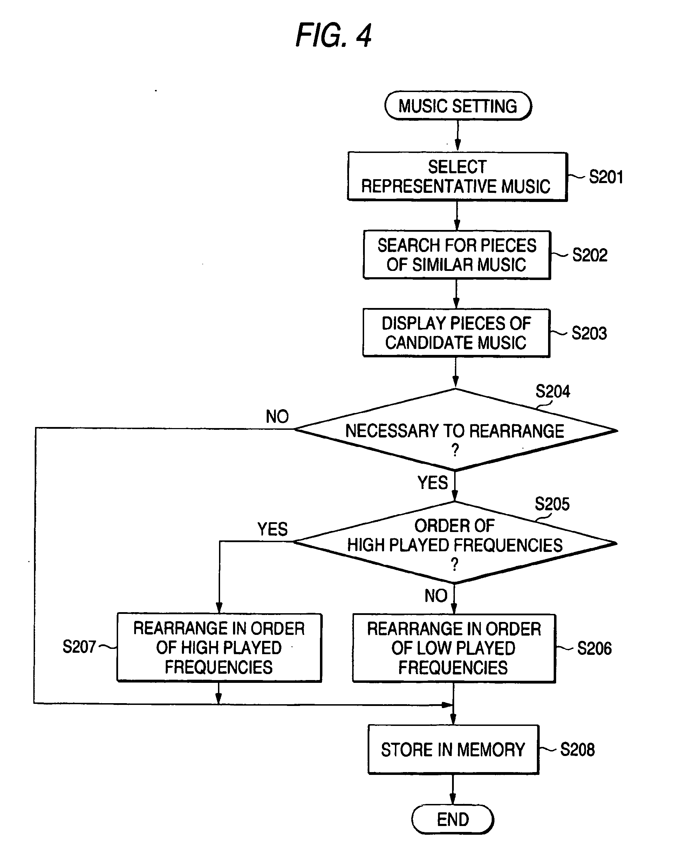

Fig. 4 is a flow chart showing the flow of a music setting operation of the music searching device. First, when the user of the device presses the stored music button 21 on the operation panel, all pieces of music stored in the music database 1 are displayed in a list in the title display area 24. Because, for example, about one hundred pieces of music are stored in the music database 1, the user scrolls the titles in the title display area 24 with the up-arrow key 25 and the down-arrow key 26, selects the title of an optional number of pieces of music the user wants to listen, and registers the selected music as a representative music with the decision button 27 (step S201). The number of pieces of representative music registered is optional, and several pieces of representative music may be registered. Also, when the user presses the representative music button 22, the user can check the registered representative music.

When the registration of the representative music is concluded and the user presses the candidate music button 23, the search processing unit 3 compares the musical characteristics of the music data of the registered representative music with the musical characteristics of other music and extracts pieces of music having a high degree of similarity (step S202). The musical characteristics are numerical values where the beat cycle and beat intensity of music, and the rate of change of these are calculated, and it is possible to calculate using a well known method. Using these characteristics, the degree of similarity is calculated. For example, in a case where three pieces of music (X1, X2 and X3) have been selected as the representative music, the degree of similarity between the selected music X1 and an optional music Y1 in the music database 1 can be expressed as a correlation R (X1, Y1) of the characteristics, so that the overall degree of similarity of the pieces of music becomes $RY1 = \Sigma R(Xn, Y1)$. Similarly, the degree of similarity (RY2, RY3, etc.) is determined with regard to all pieces of music (Y2, Y3, etc.), and music having a high degree of similarity are searched for.

After the search is concluded, the top pieces of music (e.g., ten pieces of music) having a high degree of similarity are displayed in the title display area 24 as candidate music (step S203). Next, with respect to the displayed candidate music list, it is determined whether or not the play order of the pieces of music in the list is to be changed (step S204). When the play order of the pieces of music is to be rearranged, the pressing of one of the played frequency buttons 28 is detected (step S205). When the "low" button is pressed, the list is rearranged in the order of pieces of music whose past played frequency is low (step S206). When the "high" button is pressed, the list is rearranged in the order of pieces of music whose past played frequency is high (step S207). When neither of the played frequency buttons 28 is pressed, it is determined in step S204 that the play order is not to be changed, and the music titles are displayed as they are in the order of pieces of music having a high degree of similarity.

When the user presses one of the memory buttons 29, the generated play list is stored in the music list memory 4 (step S208), and the music setting operation fort generating the play list is concluded. Another play list can be similarly generated and stored in another memory button. For example, a list of pieces of music that the user himself/herself listens to while driving may be stored in the first memory button, and a list of pieces of music that the user's children listen to while the user is driving may be stored in the second memory button.

Here, a specific example of an operation when the play order is changed will be described. For example, when a list of pieces of music for young children riding in the car to listen to while the user is driving is to be generated, if pieces of music that are not ordinarily familiar to the children are played, the children show no interest in the music and the pieces of music are not effective for calming the children. Thus, there are times when the user wants to generate a list where pieces of music that the children are used to listening and in which the children will show interest are listed in order from the beginning. In this case, when the user presses the "high" button of the played frequency buttons 28 on the operation panel, the extracted pieces of music can be sorted in the order of high played frequencies and the pieces of music can be stored as a final play list.

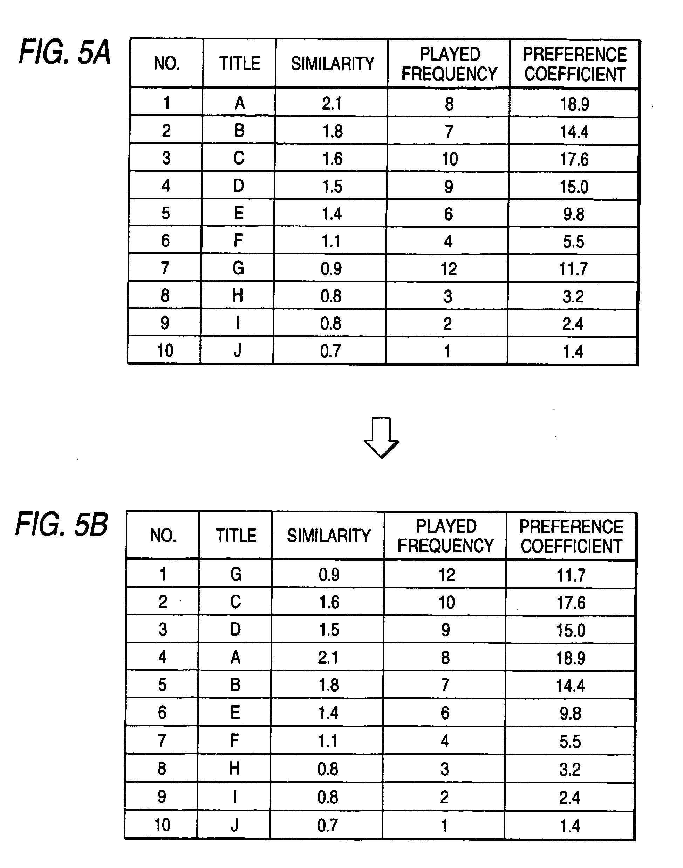

Figs. 5A and 5B are charts showing an example where the extracted pieces of music are sorted in the order of high played frequencies. The pieces of music extracted in the order of high degrees of similarity in Fig. 5A are sorted in the order of high played frequencies in Fig. 5B. By sorting the extracted pieces of music in this manner, it becomes possible to play the extracted pieces of music beginning with a piece of music that is familiar

As another sorting example, consideration is given to both degree of similarity and played frequency. Thus, when R represents the degree of similarity and n represents the played frequency of a piece of music, a list may be generated where the pieces of music are listed in the order of large numerical values (referred to below as preference coefficients) calculated by R x (1 + n).

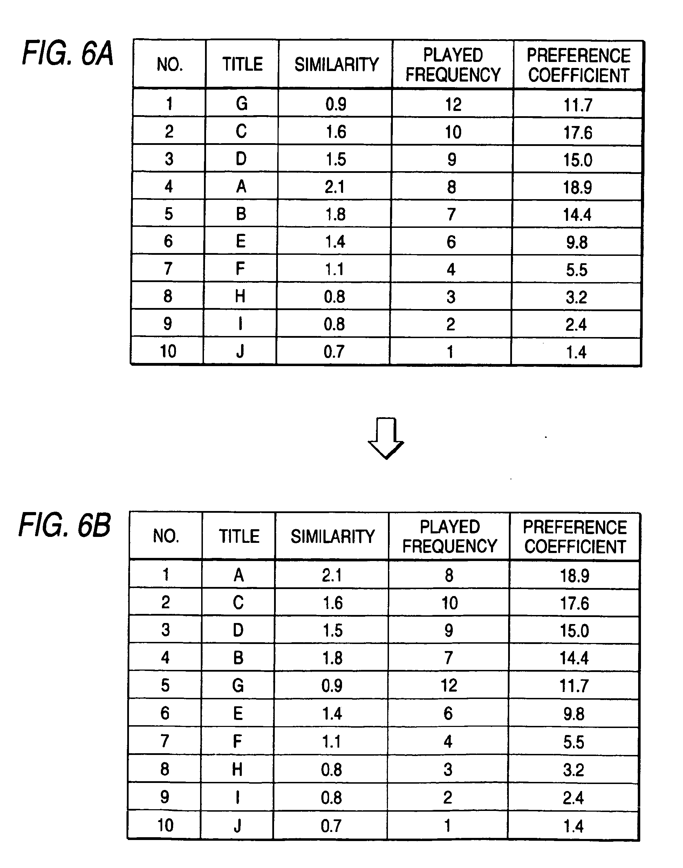

Figs. 6A and 6B are charts showing an example where the extracted pieces of music are sorted in the order of preference coefficients. The pieces of music sorted in the order of high played frequencies (Fig. 6A) are sorted in the order of high preference coefficients (Fig. 6B). By sorting the extracted pieces of music in this manner, consideration is given to both degree of similarity and played frequency, and it becomes possible to play the pieces of music in an order beginning with music that more strongly matches the preference of the person listening to pieces of music. Particularly in cases where the pieces of music are sorted on the basis of only one of the degree of similarity and the played frequency, pieces of music ranked low such as pieces of music having a low degree of similarity but a high played frequency, or pieces of music having a high degree of similarity but a low played frequency become positioned at a higher rank. For example, music G, which has a low degree of similarity and is therefore positioned at a low rank in Fig. 5A where the pieces of music are sorted by their degrees of similarity, becomes positioned at a higher rank in Fig. 6B, where the pieces of music are sorted by their preference coefficients, because its played frequency is high. Music A, which has a low played frequency and is therefore positioned in fourth place in Fig. 6A where the pieces of music are sorted by their played frequencies, becomes positioned at the top in Fig. 6B, where the pieces of music are sorted by their preference coefficients, because its degree of similarity is high.

Also, for example, when the user generates a list of music for the user himself/herself to listen to while driving, arranging the pieces of music in an order beginning with familiar music is not effective for preventing drowsiness. Thus, there are times when the user would like to generate a list that is effective for preventing drowsiness by sorting the pieces of music in an order beginning with music that the user has not listened too often before (i.e., pieces of music having a low played frequency). In this case, when the user presses the "low" button of the played frequency buttons 28 on the operation panel, the extracted pieces of music can be sorted in the order of low played frequencies and stored as the final play list.

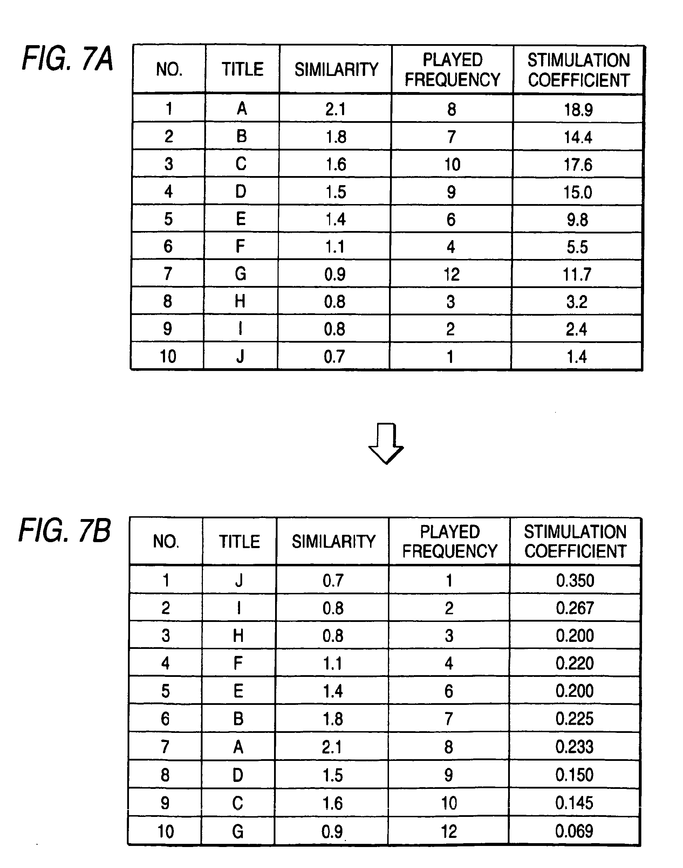

Figs. 7A and 7B are charts showing an example where the extracted pieces of music are sorted in the order of low played frequencies. Pieces of music extracted in the order of high degrees of similarity in Fig. 7A are sorted in the order of low played frequencies in Fig. 7B.

By sorting the extracted pieces of music in this manner, it becomes possible to play the pieces of music in an order beginning with unfamiliar music among the pieces of music that are similar to the selected representative music.

As another sorting example, consideration is given to both degree of similarity and played frequency. Thus, when R represents the degree of similarity and n represents the played frequency of a piece of music, a list may be generated where the pieces of music are sorted in the order of large numerical values (referred to below as stimulation coefficients) calculated by $R/(1 + n)$.

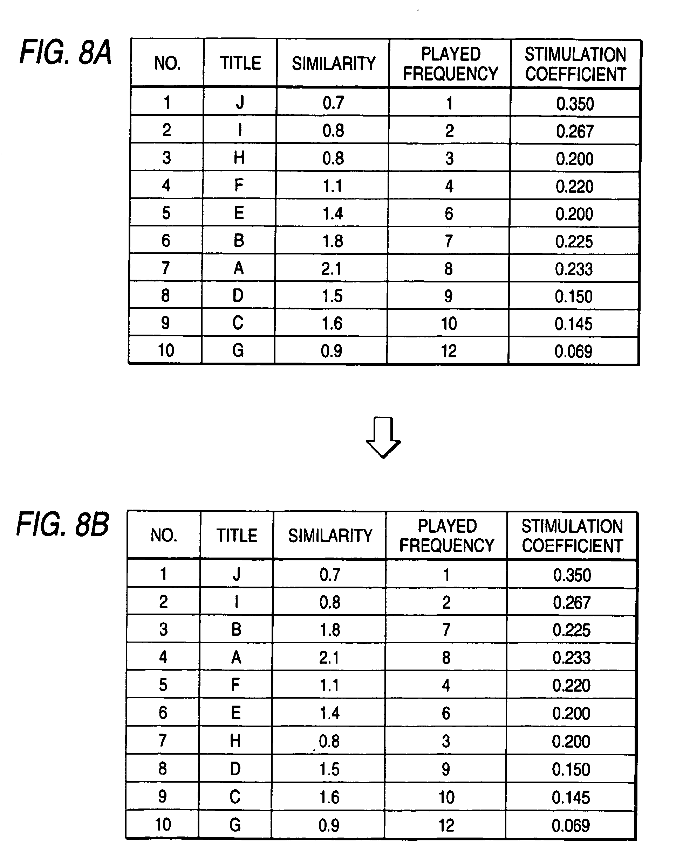

Figs. 8A and 8B are charts showing an example where the extracted pieces of music are sorted in the order of stimulation coefficients. The pieces of music sorted in the order of low played frequencies (Fig. 8A) in Fig. 7B are sorted in the order of high stimulation coefficients (Fig. 8B). By sorting the extracted pieces of music in this manner, consideration is given to both degree of similarity and played frequency, and it becomes possible to play the pieces of music in an order of pieces of music that resemble the feel of the selected representative music but have low playback frequencies, i.e., an order beginning with a piece of music that more strongly matches the raising (stimulation) of the attention of the person listening to the music. In particular, although pieces of music that have a high degree of similarity but a low played frequency are moved to lower ranks when the pieces of music are sorted only on the basis of the played frequency, they are positioned at higher ranks because they are effective for raising attention. Additionally, although pieces of music that have a low played frequency and a low degree of similarity are moved to higher ranks when the pieces of music are sorted only on the basis of the played frequency, they are positioned at lower ranks because they are not effective for raising attention. For example, music A, which has a high played frequency and is therefore positioned in seventh place in Fig. 8A where the pieces of music are sorted by their played frequencies, becomes positioned at a higher rank in Fig. 8B, where the pieces of music are sorted by their stimulation coefficients, because its degree of similarity is high. Music H, which has a low played frequency and is therefore positioned in third place in Fig. 8A where the pieces of music are sorted by their played frequencies, becomes positioned at a lower rank in Fig. 8B, where the pieces of music are sorted by their stimulation coefficients, because its degree of similarity is low.

When the play order is to be changed according to the preference coefficients or the stimulation coefficients and not according to the order of high or low played frequencies, a function of sorting the pieces of music by their preference coefficients may be applied to the "high" button of the played frequency buttons 28 on the operation panel and a function of sorting the pieces of music by their stimulation coefficients may be applied to the "low" button. As described later, it is also possible to change the above-described play orders after generation of the list, i.e., at the time of the playing operation.

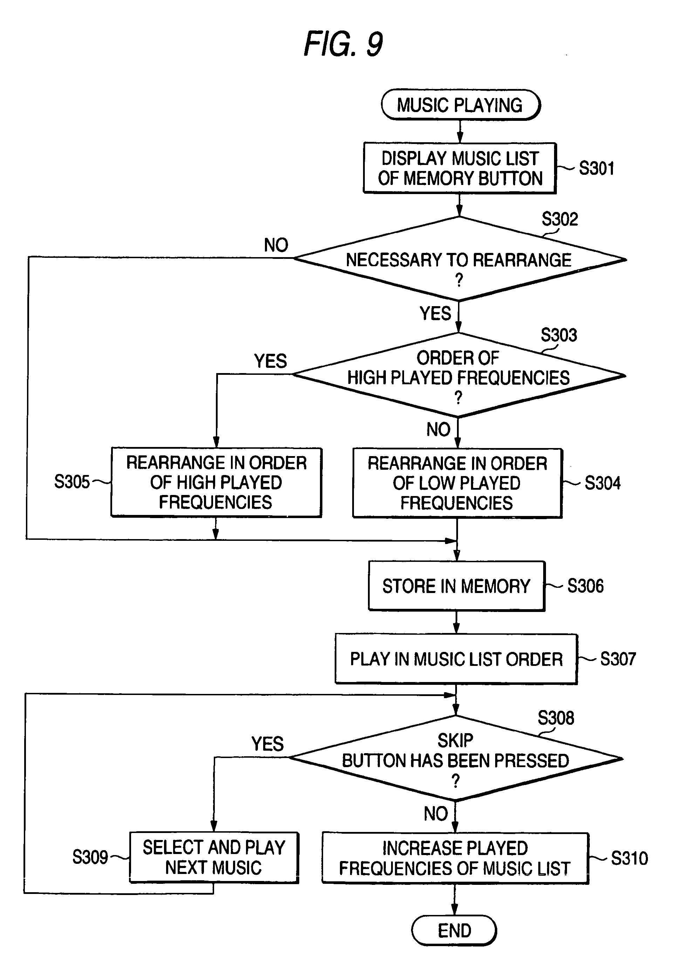

Fig. 9 is a flow chart showing the flow of a music playing operation of the music searching device. First, when the user of the device presses one of the memory buttons 29 on the operation panel, the play list stored in the pressed memory button is displayed in the title display area 24 (step S301).

Next, with respect to the displayed play list, it is determined whether or not the play order of the pieces of music in the list is to be changed (step S302). When the play order of the pieces of music is to be rearranged, the pressing of one of the played frequency buttons 28 is detected (step S303). When the "low" button is pressed, the list is rearranged in the order of pieces of music whose past played frequency is low (step S304). When the "high" button is pressed, the list is rearranged in the order of pieces of music whose past played frequency is high (step S305). When neither of the played frequency buttons 28 is pressed, it is determined in step S302 that the play order is not to be changed, and the music titles are displayed as they are in the order of high degrees of similarity.

The play list where the play order has been changed is temporarily stored in the music list memory 4 (step S306), and playing of the pieces of music is initiated in accordance with the play list (step S307). The playing of the pieces of music is implemented by transferring to the playback device 5 the music data that the search processing unit 3 has obtained from the music database 1. The search processing unit 3 determines whether or not music has been skipped by a skip button (not shown) of the playback device 5 being pressed during playing of the music (step S308). When the skip button has been pressed, the next music in the play list is played (step S309). Each time playing of the music is concluded, the data of the played frequencies associated with the music data of the music database 1 is incremented by 1, and the played frequencies of the music data are stored (step S310). As for determining the playing or skipping, appropriate criteria may be set, such as counting music that has played, for example, for 30 seconds or longer even if the skip button is pressed thereafter.

Incidentally, according to the above process of the music playing operation, because the played frequency of the music data changes each time a piece of music is played or skipped, the order of the pieces of music in the list is automatically updated in accordance therewith, even if the preference coefficient or stimulation coefficient also changes.

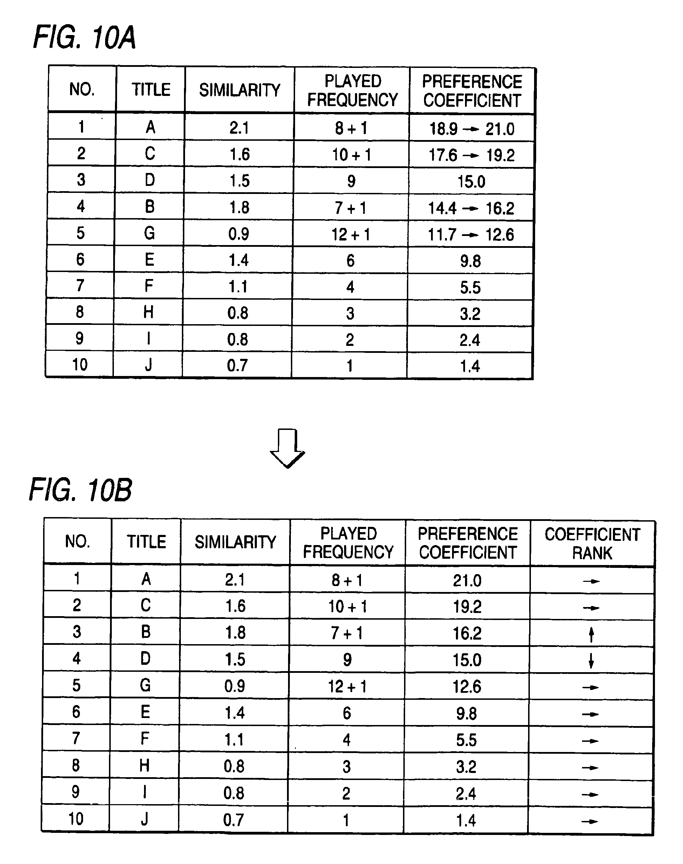

Figs. 10A and 10B are charts showing an example where, when the pieces of music are played using the list where the pieces of music are sorted by their preference coefficients, the ranks of the pieces of music are changed before and after playing. For example, it will be assumed that playing is initiated beginning with the first music in accordance with the play list where the pieces of music are sorted by their preference coefficients, the third music is skipped, playing is continued until the fifth music, and the playing operation is concluded. As shown in Fig. 10A, after playing is concluded, the preference coefficients change because the played frequencies of the music data until the fifth music increase one time excluding the third music. Thus, the next time the playing operation is conducted, the play list is updated on the basis of the changed preference coefficients, as shown in Fig. 10B. In the example of Figs. 10A and 10B, the rank of the skipped music D is lowered and the rank of music B, whose played frequency has increased, is raised.

By sorting the pieces of music by their preference coefficients (or in the order of high played frequencies), there is the effect that the list is modified to conform with the preference of the user each time playing is repeated. Specifically, it can be determined that music whose played frequency increases even though it has a low degree of similarity is music that the user likes, and the rank of that music in the play list can be gradually raised.

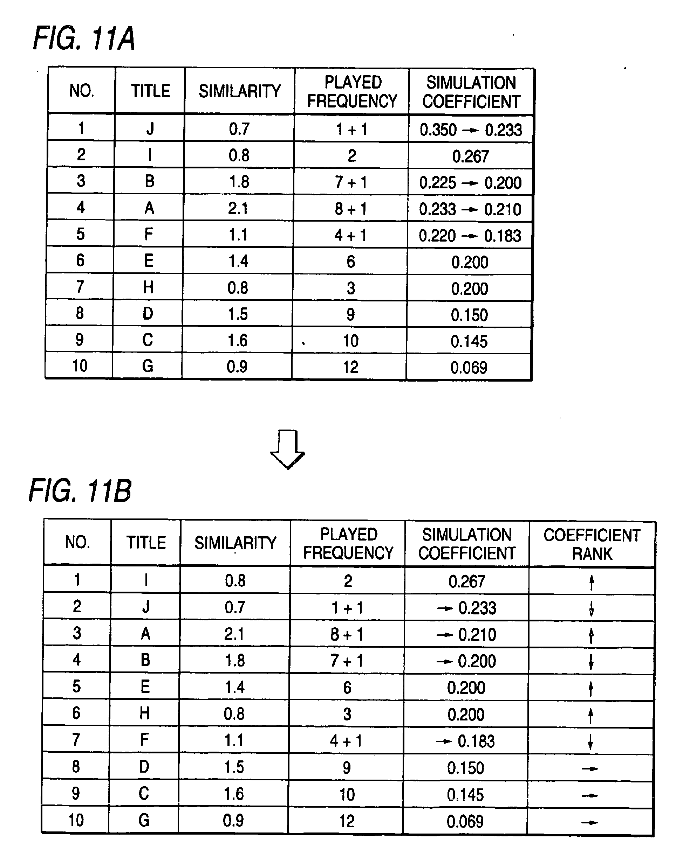

Figs. 11A and 11B are charts showing an example where, when the pieces of music are played using the list where the pieces of music are sorted by their stimulation coefficients, the ranks of the pieces of music are changed before and after playing. For example, it will be assumed that playing is initiated beginning with the first music in accordance with the play list where the pieces of music are sorted by their stimulation coefficients, the second music is skipped, playing is continued until the fifth music, and the playing operation is concluded. As shown in Fig. 11A, after playing is concluded, the stimulation coefficients change because the played frequencies of the music data until the fifth music increase one time excluding the second music. Thus, the next time the playing operation is conducted, the play list is updated on the basis of the changed stimulation coefficients, as shown in Fig. 11B. In the example of Figs. 11A and 11B, the rank of the skipped music I is raised and the rank of music F, whose degree of similarity is low and whose played frequency has increased, is lowered.

In this manner, by sorting the pieces of music by their stimulation coefficients (or in the order of low played frequencies), there is the effect that the list is modified to conform with the preference of the user each time playing is repeated. Specifically, it can be determined that a piece of music having a low degree of similarity even though its played frequency has increased is not effective for raising attention, and the rank of that music in the play list can be gradually lowered.

In the process of the above-described music playing operation, the play order of the pieces of music (the order determined by the played frequency buttons 28 and not the ranks of the pieces of music in the list) can be changed. Because the specific operation of the change is the same as that described with respect to the music setting operation, description thereof will be omitted. However, the changing of the play order in the music playing operation is different in comparison with the case of the music setting operation in that, as described above, changes in the relative ranks of the pieces of music are also reflected because the played frequencies of the pieces of music are updated each time a piece of music is played or skipped.

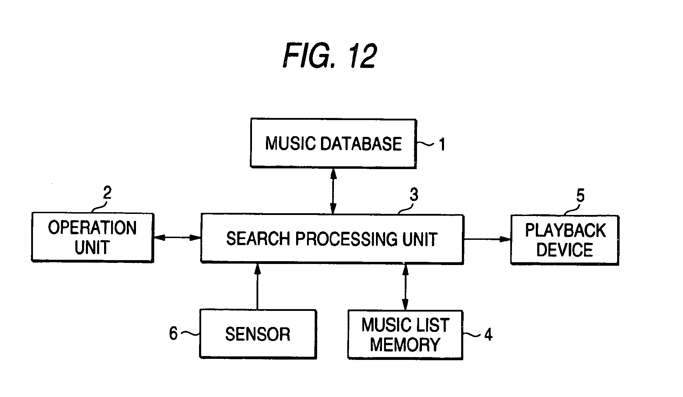

Fig. 12 is a block diagram showing the configuration of a music searching device of a second embodiment of the invention. Description will be given by adding the same reference numerals to portions that are the same as those shown in Fig. 1. The music searching device includes the music database 1, the operation unit 2, the search processing unit 3, the music list memory 4, the playback device 5 and a sensor 6.

The sensor 6 is configured by various types of well known sensors such as a sensor that detects attachment/detachment of the device itself and a sensor that measures the physical condition of the user (e.g., heart rate, pulse and blood pressure), and the detected information is transmitted to the search processing unit 3. The search processing unit 3 automatically changes the play order of the generated play list in accordance with the detection results. That is, the operation implemented by the user pressing the "high" or "low" button of the played frequency buttons 28 is automatically implemented by the sensor 6.

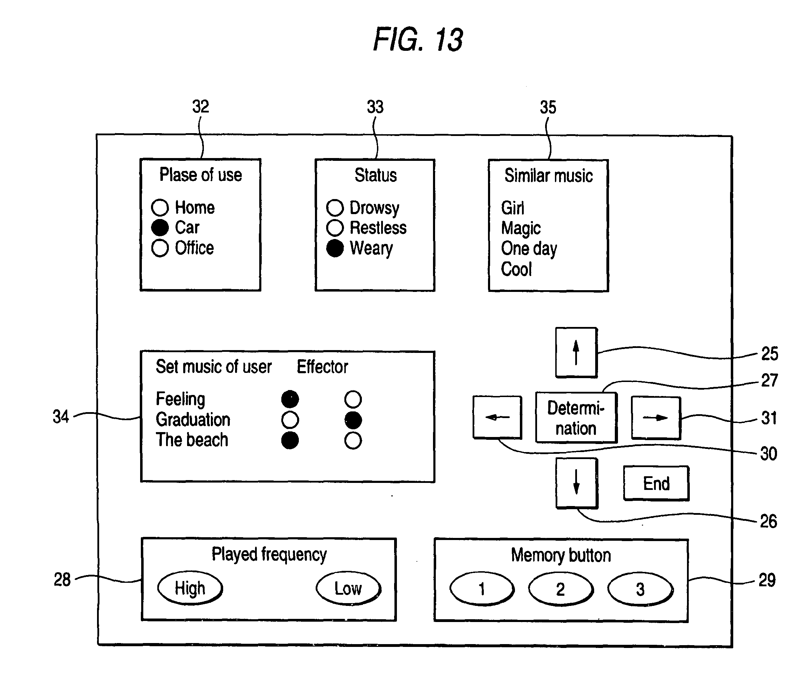

Fig. 13 is a diagram showing the configuration of the operation panel of the operation unit 2 of the music searching device. Description will be given by adding the same reference numerals to portions that are the same as those shown in Fig. 2. Disposed on the operation panel are the up-arrow key 25, the down-arrow key 26, a left-arrow key 30, a right-arrow key 31, the determination button 27, the played frequency buttons 28 and the memory buttons 29, so that various kinds of input and selection can be conducted. Also, respective conditions are displayed on a place-of-use display section 32, a status display section 33, a set representative music display section 34 and a similar music display section 35.

Displayed on the place-of-use display section 32 is the condition detected by the sensor that detects the attached/detached state of the music searching device. For example, in Fig. 13, a condition where the music searching device is installed in a vehicle is displayed. The physical condition of the user of the music searching device is displayed on the status display section 33 on the basis of the detection results of the sensor that detects heart rate and pulse. For example, in Fig. 13, a condition in which the user is weary from driving is displayed. Displayed on the set representative music display section 34 and the similar music display section 35 are the selected representative music and a list of similar pieces of music extracted on the basis of the selected representative music.

Next, the operation of the music searching device will be described. Because the flow of the panel operation and the music setting operation are the same as in the first embodiment, description thereof will be omitted, and the music playing operation will be described below.

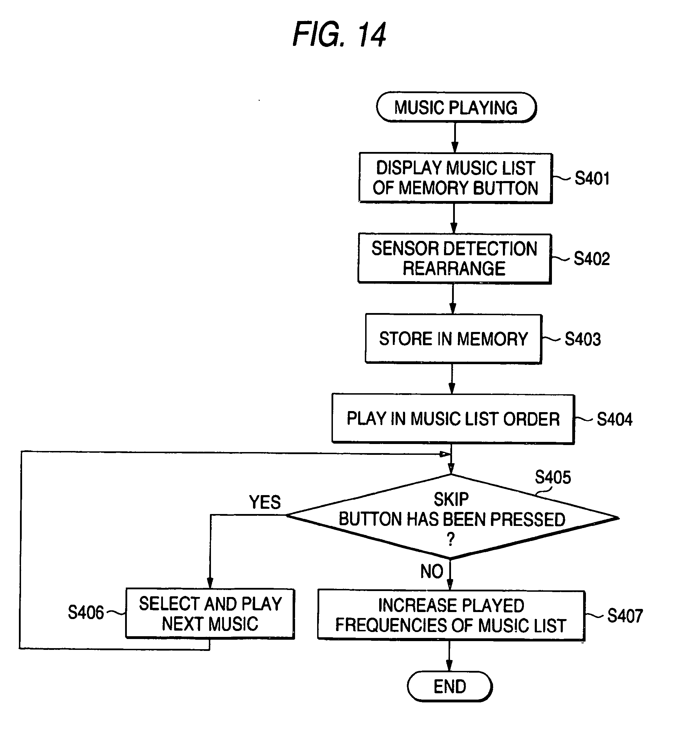

Fig. 14 is a flow chart showing the flow of the music playing operation of the music searching device. First, when the user of the device presses one of the memory buttons 29 on the operation panel, the play list stored in the pressed button is displayed in the title display area 24 (step S401).

Next, with respect to the displayed play list, the play order is changed in accordance with the detection results of the sensor 6 (step S402). The correspondence between the detection information of the sensor 6 and the play order can be set, for example, as follows. In a case where, with respect to playing a music list generated for the user himself/herself to listen to, the music searching device is disposed inside the vehicle and it is detected that the user is weary, the play list is sorted in the order of high stimulation coefficients (or the order of low played frequencies) in order to prevent the driver from becoming drowsy. In a case where, even when the same list is to be played, the music searching device is moved to a place other than inside the vehicle and a change in the playing environment is detected, the play list is sorted in the order of high preference coefficients (or the order of high played frequencies). It is preferable for the user to be able to optionally conduct such setting in accordance with the intended use. Also, it is preferable for what is set to be stored in the music database 1 or the like.

The play list where the play order has been changed is temporarily stored in the music list memory 4 (step S403), and playing of the pieces of music is initiated in accordance with the play list (step S404). Because the process from step S405 to step S407 is the same as that from step S308 to step S310 of Fig. 5 in the first embodiment, description thereof will be omitted. In this manner, the play order of the pieces of music in the play list is automatically changed by the detection of the sensor 6.

It should be noted that the invention may also be configured so that the user himself/herself inputs the place of use and the conditions of the user, rather than the place of use and the conditions of the user being detected by the sensor 6. In this case, the play order of the pieces of music in the play list is automatically changed in accordance with what is inputted.

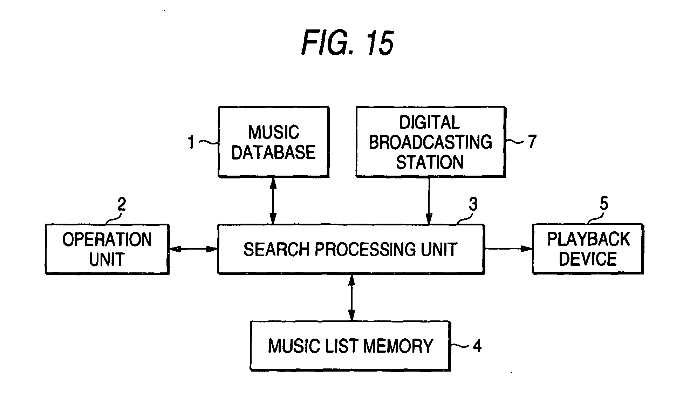

Fig. 15 is a block diagram showing the configuration of a music searching device of a third embodiment of the invention. Description will be given by adding the same reference numerals to portions that are the same as those shown in Fig. 1. In the music searching device, a function of acquiring broadcast data from a digital broadcasting station 7 is added to the search processing unit 3. Thus, in addition to playing the music data from the music database 1, the device can also play music data of a digital music broadcast.

The digital broadcasting station 7 broadcasts digital music data on multiple channels. The search processing unit 3 acquires, per channel, the music data broadcast from the digital broadcasting station 7 with a well known receiving device, and compares the musical characteristics of the obtained music data with the musical characteristics of the representative music. The search processing unit 3 can search for channels broadcasting music data having a high degree of similarity, select such channel and transmits the broadcast data to the playback device 5. Because other constituent elements and the configuration of the operation panel are the same as those of the first embodiment, description thereof will be omitted.

Next, the operation of the music searching device of the above-described configuration will be described in detail. Because the flow of the panel operation and the music setting operation are the same as those in the first embodiment, description thereof will be omitted, and the music playing operation will be described below.

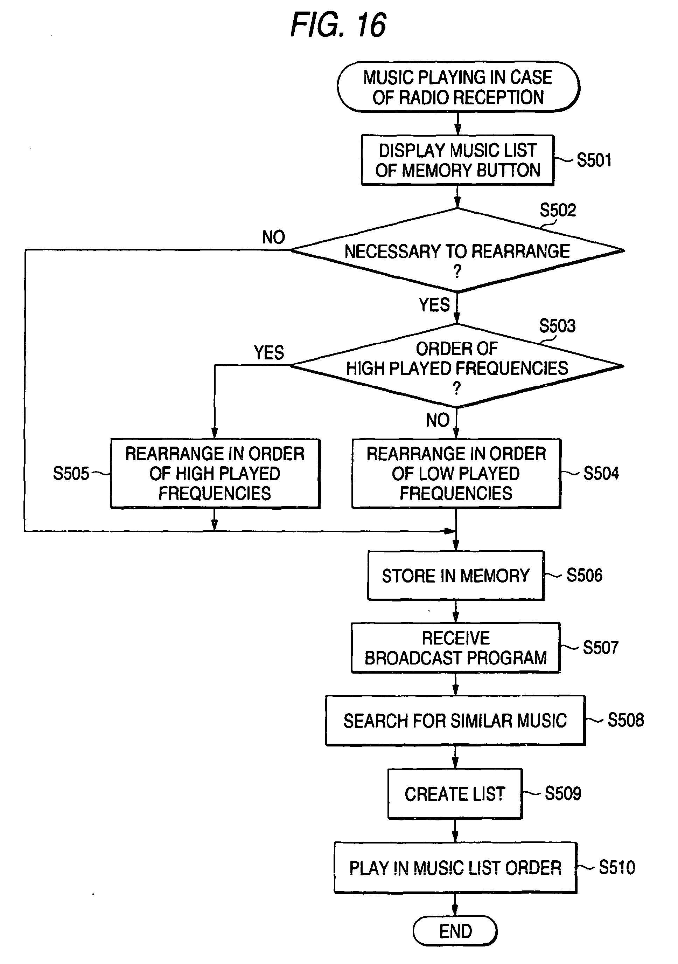

Fig. 16 is a flow chart showing the flow of the music playing operation of the music searching device. First, when the user of the device presses one of the memory buttons 29 on the operation panel, the play list stored in the pressed button is displayed in the title display area 24 (step S501).

Because the process from step S502 to step S506 is the same as that from step S302 to step S306 of Fig. 5 in the first embodiment, description thereof will be omitted. After the play list is stored in the music list memory 4, the search processing unit 3 receives the broadcast data from the digital broadcasting station (step S507).

For example, the search processing unit 3 acquires the broadcasted music data in 10 seconds, extracts the musical characteristics of the acquired music data with a well known method, and compares those musical characteristics with the musical characteristics of the representative music selected during the music setting operation. The search processing unit 3 conducts comparison and calculation of the degree of similarity with the same method as in the first embodiment, and searches for channels broadcasting music data of music having a high degree of similarity (step S508). The search processing unit 3 adds the channel to the play list (step S509) and initiates playing in accordance with the play list (step S510).

It should be noted that it is also possible to extract only the broadcasts (channels) of the digital broadcasting station 7 and play the pieces of music without searching the music data in the music database 1. In this manner, in relation to the broadcast data from the digital broadcasting station, the search processing unit 3 can extract channels on which are broadcasted music having a high degree of similarity with the representative music and play those music.

As described above, according to the music searching method including the step S202 of comparing, on the basis of degree of similarity, representative music that the user has set in step S201 and serves as the basis for the search and plural pieces of music that serve as search targets and the step S203 of selecting, on the basis of the comparison results, at least one piece of music having a high degree of similarity, and the music searching program that causes a computer to function as means that compares, on the basis of degree of similarity, representative music that the user has set and serves as the basis for the search and plural pieces of music that serve as search targets, and means that selects, on the basis of the comparison results, at least one piece of music having a high degree of similarity, the music set as the representative music is used as a criterion, whereby the search criterion becomes objective and pieces of music that match the desires of the user can be searched for in comparison to conventional technologies that search for pieces of music on the basis of sensibility or impressions.

Also, according to the music searching device including a representative music setting unit (the operation unit 2) that sets a representative music serving as the basis for the search, a comparing unit (the search processing unit 3) that compares, on the basis of degree of similarity, the representative music and plural pieces of music that serve as search targets, a similar music selecting unit (the search processing unit 3) that selects, on the basis of the comparison results, plural pieces of music having a high degree of similarity, and a list generating unit (the search processing unit 3) that generates a music list where the selected plural pieces of music are sorted in ascending order or descending order on the basis of a played frequency associated with each of the selected plural pieces of music, the music set as the representative music is used as a criterion, whereby the search criterion becomes objective and pieces of music that match the desires of the user can be searched for in comparison to conventional technologies that search for pieces of music on the basis of sensibility or impressions. Moreover, a music list suited for the environment in which music is to be listened can be generated with consideration given to played frequency.

**Claims**

1. A music searching method for searching, in a music database, a piece of music which a user desires to listen to, the music searching method comprising the steps of:

   comparing, on the basis of a degree of similarity in the rates of change of the beat cycles and beat intensities, representative music, which the user has set and serves as the basis for the search, with a plurality of pieces of music, which are search targets;
   selecting, on the basis of the comparison results, a plurality of pieces of music having a high degree of similarity

the method **characterized by** further comprising the step of:

   sorting the pieces of selected music based on stimulation coefficients calculated by dividing the degree of similarities of the pieces of selected music by the frequency of play of the pieces of selected music.

2. The music searching method according to claim 1, wherein the selected piece of music is a plurality of pieces of music, the music searching method further comprising the steps of:

   referencing played frequencies, which are associated the selected pieces of music, respectively; and
   sorting, on the basis of the played frequencies, the selected pieces of music in ascending order or descending order.

3. The music searching method according to claim 2, further comprising the steps of:

   updating the played frequencies each time a piece of music is played; and
   sorting, on the basis of the updated played frequencies, the selected pieces of music in ascending order or descending order.

4. The music searching method according to claim 2, further comprising the steps of:

   updating the played frequencies each time a piece of music is skipped; and
   sorting, on the basis of the updated played frequencies, the selected pieces of music in ascending order or descending order.

5. The music searching method according to claim 2, further comprising the step of:

   sorting, on the basis of environment in which the pieces of music are played, the selected pieces of music in ascending order or descending order.

6. The music searching method according to claim 1, further comprising the step of:

   acquiring, from a multi-channel digital broadcast, the pieces of music that serve as search targets.

7. The music searching method according to any of the preceding claims, wherein the stimulation coefficient of a piece of music is calculated using the following equation:

$$ST = \frac{R}{(1+n)},$$

where ST represents the stimulation coefficient, R represents the degree of similarity and n represents the played frequency.

8. A music searching device for searching, in a music database, a piece of music which a user desires to listen to, the music searching device comprising:

   comparing means arranged to compare, on the basis of a degree of similarity in the rates of change of the beat cycles and beat intensities, representative music, which the user has set and serves as the basis for the search, with a plurality of pieces of music, which are search targets;
   selecting means arranged to select, on the basis of the comparison results, a plurality of pieces of music having a high degree of similarity; and, the music searching device **characterized by** further comprising:

   sorting means arranged to sort the pieces of music selected by the selecting means based on stimulation coefficients calculated by dividing the degree of similarities of the pieces of selected music by the frequency of play of the pieces of the pieces of selected music.

9. The music searching device according to claim 8, wherein the stimulation coefficient of a piece of music is calculated using the following equation:

$$ST = \frac{R}{(1+n)},$$

where ST represents the stimulation coefficient, R represents the degree of similarity and n represents the played frequency.

10. A music searching computer program which searches for, in a music database, a piece of music which a user desires to listen to, the music searching computer program causing a computer to perform a process comprising the steps of:

    comparing, on the basis of a degree of similarity in the rates of change of the beat cycles and beat intensities, representative music, which the user has set and serves as the basis for the search, with a plurality of pieces of music, which are search targets;
selecting, on the basis of the comparison results, a plurality of pieces of music having a high degree of similarity,

the method **characterized by** further comprising the step of:

    sorting the pieces of selected music based on stimulation coefficients calculated by dividing the degree of similarities of the pieces of selected music by the frequency of play of the pieces of selected music.

11. The music searching computer program according to claim 10, wherein the stimulation coefficient of a piece of music is calculated using the following equation:

$$ST = \frac{R}{(1+n)},$$

where ST represents the stimulation coefficient, R represents the degree of similarity and n represents the played frequency.

**Patentansprüche**

1. Musiksuchverfahren zum in einer Musikdatenbank erfolgenden Suchen eines Musikstückes, das ein Anwender anhören will, wobei das Musiksuchverfahren die nachfolgenden Schritte umfasst:

   auf Grundlage eines Ähnlichkeitsgrades bei den Änderungsraten der Beatzyklen und Beatintensitäten erfolgendes Vergleichen repräsentativer Musik, die der Anwender eingestellt hat und die als Grundlage für die Suche dient, mit einer Mehrzahl von Musikstücken, die Suchziele sind;
   auf Grundlage der Vergleichsergebnisse erfolgendes Auswählen einer Mehrzahl von Musikstücken mit einem hohen Ähnlichkeitsgrad,

wobei das Verfahren **dadurch gekennzeichnet ist, dass** es des Weiteren den nachfolgenden Schritt umfasst:

   Sortieren der Stücke ausgewählter Musik auf Grundlage von Stimulationskoeffizienten, die durch Teilen der Ähnlichkeitsgrade der Stücke ausgewählter Musik durch die Spielhäufigkeit der Stücke ausgewählter Musik berechnet werden.

**2.** Musiksuchverfahren nach Anspruch 1, bei dem das ausgewählte Musikstück eine Mehrzahl von Musikstücken ist und das Musiksuchverfahren des Weiteren die nachfolgenden Schritte umfasst:

jeweiliges Referenzieren der Spielhäufigkeiten, die mit den ausgewählten Musikstücken verknüpft sind; und
auf Grundlage der Spielhäufigkeiten erfolgendes Sortieren der ausgewählten Musikstücke in aufsteigender Reihenfolge oder absteigender Reihenfolge.

**3.** Musiksuchverfahren nach Anspruch 2, des Weiteren umfassend die nachfolgenden Schritte:

Aktualisieren der Spielhäufigkeiten immer dann, wenn ein Musikstück gespielt wird; und
auf Grundlage der aktualisierten Spielhäufigkeiten erfolgendes Sortieren der ausgewählten Musikstücke in aufsteigender Reihenfolge oder absteigender Reihenfolge.

**4.** Musiksuchverfahren nach Anspruch 2, des Weiteren umfassend die nachfolgenden Schritte:

Aktualisieren der Spielhäufigkeiten immer dann, wenn ein Musikstück übersprungen wird; und
auf Grundlage der aktualisierten Spielhäufigkeiten erfolgendes Sortieren der ausgewählten Musikstücke in aufsteigender Reihenfolge oder absteigender Reihenfolge.

**5.** Musiksuchverfahren nach Anspruch 2, des Weiteren umfassend den nachfolgenden Schritt:

auf Grundlage der Umgebung, in der die Musikstücke gespielt werden, erfolgendes Sortieren der ausgewählten Musikstücke in aufsteigender Reihenfolge oder absteigender Reihenfolge.

**6.** Musiksuchverfahren nach Anspruch 1, des Weiteren umfassend den nachfolgenden Schritt:

aus einem Vielkanaldigitalrundfunk erfolgendes Ermitteln der Musikstücke, die als Suchziele dienen.

**7.** Musiksuchverfahren nach einem der vorhergehenden Ansprüche, bei dem der Stimulationskoeffizient eines Musikstückes unter Verwendung der Gleichung $ST = R / (1 + n)$ berechnet wird, wobei ST den Stimulationskoeffizient, R den Ähnlichkeitsgrad und n die Spielhäufigkeit bezeichnen.

**8.** Musiksuchvorrichtung zum in einer Musikdatenbank erfolgenden Suchen eines Musikstückes, das ein Anwender anhören will, wobei die Musiksuchvorrichtung umfasst:

eine Vergleichseinrichtung, die dafür ausgelegt ist, auf Grundlage eines Ähnlichkeitsgrades bei den Änderungsraten der Beatzyklen und Beatintensitäten repräsentative Musik, die der Anwender eingestellt hat und die als Grundlage für die Suche dient, mit einer Mehrzahl von Musikstücken, die Suchziele sind, zu vergleichen; eine Auswähleinrichtung, die dafür ausgelegt ist, auf Grundlage der Vergleichsergebnisse eine Mehrzahl von Musikstücken mit einem hohen Ähnlichkeitsgrad auszuwählen;

wobei die Musiksuchvorrichtung **dadurch gekennzeichnet ist, dass** sie des Weiteren umfasst:

eine Sortiereinrichtung, die dafür ausgelegt ist, die Musikstücke zu sortieren, die von der Auswähleinrichtung auf Grundlage der Stimulationskoeffizienten ausgewählt werden, die durch Dividieren der Ähnlichkeitsgrade der Stücke ausgewählter Musik durch die Spielhäufigkeit der Stücke der Stücke ausgewählter Musik berechnet werden.

**9.** Musiksuchvorrichtung nach Anspruch 8, bei der der Stimulationskoeffizient eines Musikstückes unter Verwendung der Gleichung $ST = R / (1 + n)$ berechnet wird, wobei ST den Stimulationskoeffizient, R den Ähnlichkeitsgrad und n die Spielhäufigkeit bezeichnen.

**10.** Musiksuchcomputerprogramm, das in einer Musikdatenbank ein Musikstück, das ein Anwender anhören will, sucht, wobei das Musiksuchcomputerprogramm einen Computer veranlasst, ein Verfahren auszuführen, das die nachfolgenden Schritte umfasst:

auf Grundlage eines Ähnlichkeitsgrades bei den Änderungsraten der Beatzyklen und Beatintensitäten erfolgendes Vergleichen repräsentativer Musik, die der Anwender eingestellt hat und die als Grundlage für die Suche dient, mit einer Mehrzahl von Musikstücken, die Suchziele sind; auf Grundlage der Vergleichsergebnisse erfolgendes Auswählen einer Mehrzahl von Musikstücken mit einem hohen Ähnlichkeitsgrad,

wobei das Verfahren **dadurch gekennzeichnet ist, dass** es des Weiteren den nachfolgenden Schritt umfasst:

Sortieren der Stücke ausgewählter Musik auf Grundlage von Stimulationskoeffizienten, die durch Teilen der Ähnlichkeitsgrade der Stücke ausgewählter Musik durch die Spielhäufigkeit der Stücke ausgewählter Musik berechnet werden.

11. Musiksuchcomputerprogramm nach Anspruch 10, bei dem der Stimulationskoeffizient eines Musikstükkes unter Verwendung der Gleichung ST = R / (1 + n) berechnet wird, wobei ST den Stimulationskoeffizient, R den Ähnlichkeitsgrad und n die Spielhäufigkeit bezeichnen.

**Revendications**

1. Procédé de recherche de musique destiné à rechercher, dans une base de données de musique, un morceau de musique, qu'un utilisateur souhaite écouter, le procédé de recherche de musique comprenant les étapes consistant à :

   comparer, sur la base d'un degré de similitude dans les vitesses de changement des cycles de battement et des intensités de battement, de la musique représentative, que l'utilisateur a établie et dont il se sert comme étant la base de la recherche, avec une pluralité de morceaux de musique, qui sont les cibles de recherche, sélectionner, sur la base des résultats de comparaison, une pluralité de morceaux de musique présentant un degré de similarité élevé,

   le procédé étant **caractérisé par** le fait de comprendre en outre l'étape consistant à :

   trier les morceaux de musique sélectionnée sur la base de coefficients de stimulation calculés en divisant le degré de similarité des morceaux de musique sélectionnés par la fréquence de restitution des morceaux de musique sélectionnée.

2. Procédé de recherche de musique selon la revendication 1, dans lequel le morceau de musique sélectionnée est une pluralité de morceaux de musique, le procédé de recherche de musique comprenant en outre les étapes consistant à :

   référencer les fréquences restituées, qui sont associées aux morceaux sélectionnés de musique, respectivement, et
   trier, sur la base des fréquences restituées, les morceaux sélectionnés de musique dans l'ordre ascendant ou l'ordre descendant.

3. Procédé de recherche de musique selon la revendication 2, comprenant en outre les étapes consistant à :

mettre à jour les fréquences restituées chaque fois qu'un morceau de musique est restitué, et trier, sur la base des fréquences restituées mises à jour, les morceaux de musique sélectionnés dans l'ordre ascendant ou l'ordre descendant.

4. Procédé de recherche de musique selon la revendication 2, comprenant en outre les étapes consistant à :

   mettre à jour les fréquences restituées chaque fois qu'un morceau de musique est sauté, et trier, sur la base des fréquences restituées mises à jour, les morceaux de musique sélectionnés dans l'ordre ascendant ou l'ordre descendant.

5. Procédé de recherche de musique selon la revendication 2, comprenant en outre l'étape consistant à :

   trier, sur la base de l'environnement dans lequel les morceaux de musique sont restitués, les morceaux de musique sélectionnés dans l'ordre ascendant ou l'ordre descendant.

6. Procédé de recherche de musique selon la revendication 1, comprenant en outre l'étape consistant à :

   acquérir, à partir d'une diffusion numérique multicanaux, les morceaux de musique qui servent de cibles de recherche.

7. Procédé de recherche de musique selon l'une quelconque des revendications précédentes, dans lequel le coefficient de simulation d'un morceau de musique est calculé en utilisant l'équation suivante :

$$ST = \frac{R}{(1+n)},$$

où ST représente le coefficient de stimulation, R représente le degré de similarité et n représente la fréquence restituée.

8. Dispositif de recherche de musique destiné à rechercher, dans une base de données de musique, un morceau de musique qu'un utilisateur souhaite écouter, le dispositif de recherche de musique comprenant :

   un moyen de comparaison agencé pour comparer, sur la base d'un degré de similarité des vitesses de changement des cycles de battement et des intensités de battement, une musique représentative, que l'utilisateur a établie et dont il se sert comme base pour la recherche, avec une pluralité de morceaux de musique, qui sont des cibles de recherche,
un moyen de sélection agencé pour sélectionner, sur la base des résultats de la comparaison, une pluralité de morceaux de musique ayant un degré de similarité élevé, et le dispositif de recherche de musique étant **caractérisé par** le fait de comprendre en outre :

un moyen de tri agencé pour trier les morceaux de musique sélectionnée par le moyen de sélection sur la base de coefficients de stimulation calculés en divisant le degré de similarité des morceaux de musique sélectionnée par la fréquence de restitution des morceaux de musique sélectionnée.

**9.** Dispositif de recherche de musique selon la revendication 8, dans lequel le coefficient de stimulation d'un morceau de musique est calculé en utilisant l'équation suivante :

$$ST = \frac{R}{(1+n)},$$

où ST représente le coefficient de stimulation, R représente le degré de similarité et n représente la fréquence restituée.

**10.** Programme informatique de recherche de musique qui recherche, dans une base de données de musique, un morceau de musique qu'un utilisateur souhaite écouter, le programme informatique de recherche de musique amenant un ordinateur à exécuter un traitement comprenant les étapes consistant à :

comparer, sur la base d'un degré de similarité des vitesses de changement des cycles de battement et des intensités de battement, une musique représentative, que l'utilisateur a établie et dont il se sert comme étant la base pour la recherche, avec une pluralité de morceaux de musique, qui sont les cibles de recherche,
sélectionner, sur la base des résultats de comparaison, une pluralité de morceaux de musique ayant un haut degré de similarité,

le procédé étant **caractérisé par** le fait de comprendre en outre les étapes consistant à :

trier les morceaux de musique sélectionnée sur la base de coefficients de stimulation calculés en divisant le degré de similarité des morceaux de musique sélectionnée par la fréquence de restitution des morceaux de musique sélectionnée.

**11.** Programme informatique de recherche de musique selon la revendication 10, dans lequel le coefficient de stimulation d'un morceau de musique est calculé en utilisant l'équation suivante :

$$ST = \frac{R}{(1+n)},$$

où ST représente le coefficient de stimulation, R représente le degré de similarité et n représente la fréquence restituée.

# FIG. 1

## FIG. 2

EP 1 420 388 B1

# FIG. 3

PANEL OPERATION

S101

MEMORY BUTTON HAS BEEN PRESSED?

YES

NO

S102 — SET MUSIC

PLAY MUSIC — S103

END

## FIG. 4

```
             ( MUSIC SETTING )
                    |
        +------------------------+
        |        SELECT          |~ S201
        |  REPRESENTATIVE MUSIC  |
        +------------------------+
                    |
        +------------------------+
        |   SEARCH FOR PIECES    |~ S202
        |    OF SIMILAR MUSIC    |
        +------------------------+
                    |
        +------------------------+
        |   DISPLAY PIECES OF    |~ S203
        |    CANDIDATE MUSIC     |
        +------------------------+
                    |
                              S204
   NO       < NECESSARY TO REARRANGE >
                    ?
                  YES |
                              S205
   YES        <  ORDER OF                >
             < HIGH PLAYED FREQUENCIES >
                    ?
                  NO |
  +-------------------+    +-------------------+
  | REARRANGE IN ORDER|    | REARRANGE IN ORDER|
S207~| OF HIGH PLAYED  |    | OF LOW PLAYED    |~ S206
  |   FREQUENCIES     |    |   FREQUENCIES    |
  +-------------------+    +-------------------+
                    |
          +---------------------+
          |   STORE IN MEMORY   |~ S208
          +---------------------+
                    |
                 ( END )
```

**FIG. 5A**

| NO. | TITLE | SIMILARITY | PLAYED FREQUENCY | PREFERENCE COEFFICIENT |
|---|---|---|---|---|
| 1 | A | 2.1 | 8 | 18.9 |
| 2 | B | 1.8 | 7 | 14.4 |
| 3 | C | 1.6 | 10 | 17.6 |
| 4 | D | 1.5 | 9 | 15.0 |
| 5 | E | 1.4 | 6 | 9.8 |
| 6 | F | 1.1 | 4 | 5.5 |
| 7 | G | 0.9 | 12 | 11.7 |
| 8 | H | 0.8 | 3 | 3.2 |
| 9 | I | 0.8 | 2 | 2.4 |
| 10 | J | 0.7 | 1 | 1.4 |

⇩

**FIG. 5B**

| NO. | TITLE | SIMILARITY | PLAYED FREQUENCY | PREFERENCE COEFFICIENT |
|---|---|---|---|---|
| 1 | G | 0.9 | 12 | 11.7 |
| 2 | C | 1.6 | 10 | 17.6 |
| 3 | D | 1.5 | 9 | 15.0 |
| 4 | A | 2.1 | 8 | 18.9 |
| 5 | B | 1.8 | 7 | 14.4 |
| 6 | E | 1.4 | 6 | 9.8 |
| 7 | F | 1.1 | 4 | 5.5 |
| 8 | H | 0.8 | 3 | 3.2 |
| 9 | I | 0.8 | 2 | 2.4 |
| 10 | J | 0.7 | 1 | 1.4 |

*FIG. 6A*

| NO. | TITLE | SIMILARITY | PLAYED FREQUENCY | PREFERENCE COEFFICIENT |
|---|---|---|---|---|
| 1 | G | 0.9 | 12 | 11.7 |
| 2 | C | 1.6 | 10 | 17.6 |
| 3 | D | 1.5 | 9 | 15.0 |
| 4 | A | 2.1 | 8 | 18.9 |
| 5 | B | 1.8 | 7 | 14.4 |
| 6 | E | 1.4 | 6 | 9.8 |
| 7 | F | 1.1 | 4 | 5.5 |
| 8 | H | 0.8 | 3 | 3.2 |
| 9 | I | 0.8 | 2 | 2.4 |
| 10 | J | 0.7 | 1 | 1.4 |

*FIG. 6B*

| NO. | TITLE | SIMILARITY | PLAYED FREQUENCY | PREFERENCE COEFFICIENT |
|---|---|---|---|---|
| 1 | A | 2.1 | 8 | 18.9 |
| 2 | C | 1.6 | 10 | 17.6 |
| 3 | D | 1.5 | 9 | 15.0 |
| 4 | B | 1.8 | 7 | 14.4 |
| 5 | G | 0.9 | 12 | 11.7 |
| 6 | E | 1.4 | 6 | 9.8 |
| 7 | F | 1.1 | 4 | 5.5 |
| 8 | H | 0.8 | 3 | 3.2 |
| 9 | I | 0.8 | 2 | 2.4 |
| 10 | J | 0.7 | 1 | 1.4 |

*FIG. 7A*

| NO. | TITLE | SIMILARITY | PLAYED FREQUENCY | STIMULATION COEFFICIENT |
|---|---|---|---|---|
| 1 | A | 2.1 | 8 | 18.9 |
| 2 | B | 1.8 | 7 | 14.4 |
| 3 | C | 1.6 | 10 | 17.6 |
| 4 | D | 1.5 | 9 | 15.0 |
| 5 | E | 1.4 | 6 | 9.8 |
| 6 | F | 1.1 | 4 | 5.5 |
| 7 | G | 0.9 | 12 | 11.7 |
| 8 | H | 0.8 | 3 | 3.2 |
| 9 | I | 0.8 | 2 | 2.4 |
| 10 | J | 0.7 | 1 | 1.4 |

*FIG. 7B*

| NO. | TITLE | SIMILARITY | PLAYED FREQUENCY | STIMULATION COEFFICIENT |
|---|---|---|---|---|
| 1 | J | 0.7 | 1 | 0.350 |
| 2 | I | 0.8 | 2 | 0.267 |
| 3 | H | 0.8 | 3 | 0.200 |
| 4 | F | 1.1 | 4 | 0.220 |
| 5 | E | 1.4 | 6 | 0.200 |
| 6 | B | 1.8 | 7 | 0.225 |
| 7 | A | 2.1 | 8 | 0.233 |
| 8 | D | 1.5 | 9 | 0.150 |
| 9 | C | 1.6 | 10 | 0.145 |
| 10 | G | 0.9 | 12 | 0.069 |

*FIG. 8A*

| NO. | TITLE | SIMILARITY | PLAYED FREQUENCY | STIMULATION COEFFICIENT |
|---|---|---|---|---|
| 1 | J | 0.7 | 1 | 0.350 |
| 2 | I | 0.8 | 2 | 0.267 |
| 3 | H | 0.8 | 3 | 0.200 |
| 4 | F | 1.1 | 4 | 0.220 |
| 5 | E | 1.4 | 6 | 0.200 |
| 6 | B | 1.8 | 7 | 0.225 |
| 7 | A | 2.1 | 8 | 0.233 |
| 8 | D | 1.5 | 9 | 0.150 |
| 9 | C | 1.6 | 10 | 0.145 |
| 10 | G | 0.9 | 12 | 0.069 |

⇩

*FIG. 8B*

| NO. | TITLE | SIMILARITY | PLAYED FREQUENCY | STIMULATION COEFFICIENT |
|---|---|---|---|---|
| 1 | J | 0.7 | 1 | 0.350 |
| 2 | I | 0.8 | 2 | 0.267 |
| 3 | B | 1.8 | 7 | 0.225 |
| 4 | A | 2.1 | 8 | 0.233 |
| 5 | F | 1.1 | 4 | 0.220 |
| 6 | E | 1.4 | 6 | 0.200 |
| 7 | H | 0.8 | 3 | 0.200 |
| 8 | D | 1.5 | 9 | 0.150 |
| 9 | C | 1.6 | 10 | 0.145 |
| 10 | G | 0.9 | 12 | 0.069 |

## FIG. 9

```
        ( MUSIC PLAYING )
              |
              v
   +------------------------+
   |   DISPLAY MUSIC LIST    |~ S301
   |   OF MEMORY BUTTON      |
   +------------------------+
              |
              v
           /        \       S302
    NO   < NECESSARY TO REARRANGE >
   <------<         ?        >
          \        /
              | YES
              v
           /        \        S303
   YES   <   ORDER OF        >
  <------< HIGH PLAYED FREQUENCIES >
          \         ?        /
              | NO
              v
```

|  |  |
|---|---|
| REARRANGE IN ORDER OF HIGH PLAYED FREQUENCIES — S305 | REARRANGE IN ORDER OF LOW PLAYED FREQUENCIES ~ S304 |

```
              v
   +------------------------+
   |    STORE IN MEMORY     |~ S306
   +------------------------+
              |
              v
   +------------------------+
   |  PLAY IN MUSIC LIST ORDER |~ S307
   +------------------------+
              |
              v
           /        \        S308
   YES   <    SKIP            >
  <------< BUTTON HAS BEEN PRESSED >
          \         ?        /
              | NO
              v
```

|  |  |
|---|---|
| SELECT AND PLAY NEXT MUSIC — S309 | INCREASE PLAYED FREQUENCIES OF MUSIC LIST ~ S310 |

```
                          v
                       ( END )
```

## FIG. 10A

| NO. | TITLE | SIMILARITY | PLAYED FREQUENCY | PREFERENCE COEFFICIENT |
|---|---|---|---|---|
| 1 | A | 2.1 | 8 + 1 | 18.9 → 21.0 |
| 2 | C | 1.6 | 10 + 1 | 17.6 → 19.2 |
| 3 | D | 1.5 | 9 | 15.0 |
| 4 | B | 1.8 | 7 + 1 | 14.4 → 16.2 |
| 5 | G | 0.9 | 12 + 1 | 11.7 → 12.6 |
| 6 | E | 1.4 | 6 | 9.8 |
| 7 | F | 1.1 | 4 | 5.5 |
| 8 | H | 0.8 | 3 | 3.2 |
| 9 | I | 0.8 | 2 | 2.4 |
| 10 | J | 0.7 | 1 | 1.4 |

⇩

## FIG. 10B

| NO. | TITLE | SIMILARITY | PLAYED FREQUENCY | PREFERENCE COEFFICIENT | COEFFICIENT RANK |
|---|---|---|---|---|---|
| 1 | A | 2.1 | 8 + 1 | 21.0 | → |
| 2 | C | 1.6 | 10 + 1 | 19.2 | → |
| 3 | B | 1.8 | 7 + 1 | 16.2 | ↑ |
| 4 | D | 1.5 | 9 | 15.0 | ↓ |
| 5 | G | 0.9 | 12 + 1 | 12.6 | → |
| 6 | E | 1.4 | 6 | 9.8 | → |
| 7 | F | 1.1 | 4 | 5.5 | → |
| 8 | H | 0.8 | 3 | 3.2 | → |
| 9 | I | 0.8 | 2 | 2.4 | → |
| 10 | J | 0.7 | 1 | 1.4 | → |

## FIG. 11A

| NO. | TITLE | SIMILARITY | PLAYED FREQUENCY | SIMULATION COEFFICIENT |
|---|---|---|---|---|
| 1 | J | 0.7 | 1 + 1 | 0.350 → 0.233 |
| 2 | I | 0.8 | 2 | 0.267 |
| 3 | B | 1.8 | 7 + 1 | 0.225 → 0.200 |
| 4 | A | 2.1 | 8 + 1 | 0.233 → 0.210 |
| 5 | F | 1.1 | 4 + 1 | 0.220 → 0.183 |
| 6 | E | 1.4 | 6 | 0.200 |
| 7 | H | 0.8 | 3 | 0.200 |
| 8 | D | 1.5 | 9 | 0.150 |
| 9 | C | 1.6 | 10 | 0.145 |
| 10 | G | 0.9 | 12 | 0.069 |

## FIG. 11B

| NO. | TITLE | SIMILARITY | PLAYED FREQUENCY | SIMULATION COEFFICIENT | COEFFICIENT RANK |
|---|---|---|---|---|---|
| 1 | I | 0.8 | 2 | 0.267 | ↑ |
| 2 | J | 0.7 | 1 + 1 | → 0.233 | ↓ |
| 3 | A | 2.1 | 8 + 1 | → 0.210 | ↑ |
| 4 | B | 1.8 | 7 + 1 | → 0.200 | ↓ |
| 5 | E | 1.4 | 6 | 0.200 | ↑ |
| 6 | H | 0.8 | 3 | 0.200 | ↑ |
| 7 | F | 1.1 | 4 + 1 | → 0.183 | ↓ |
| 8 | D | 1.5 | 9 | 0.150 | → |
| 9 | C | 1.6 | 10 | 0.145 | → |
| 10 | G | 0.9 | 12 | 0.069 | → |

## FIG. 12

MUSIC DATABASE ~ 1

OPERATION UNIT — 2

SEARCH PROCESSING UNIT — 3

PLAYBACK DEVICE — 5

6 ~ SENSOR

MUSIC LIST MEMORY ~ 4

## FIG. 13

EP 1 420 388 B1

# FIG. 14

```
        ( MUSIC PLAYING )
               │
               ▼
   ┌─────────────────────┐
   │  DISPLAY MUSIC LIST │── S401
   │  OF MEMORY BUTTON   │
   └─────────────────────┘
               │
               ▼
   ┌─────────────────────┐
   │  SENSOR DETECTION   │── S402
   │     REARRANGE       │
   └─────────────────────┘
               │
               ▼
   ┌─────────────────────┐
   │   STORE IN MEMORY   │── S403
   └─────────────────────┘
               │
               ▼
   ┌─────────────────────┐
   │ PLAY IN MUSIC LIST ORDER │── S404
   └─────────────────────┘
               │
               ▼
                                 S405
              ◇ SKIP
    YES     BUTTON HAS BEEN PRESSED
              ?
                       │ NO
                       ▼
   ┌─────────────────┐   ┌──────────────────────┐
S406│ SELECT AND PLAY │   │   INCREASE PLAYED    │── S407
   │   NEXT MUSIC    │   │ FREQUENCIES OF MUSIC LIST │
   └─────────────────┘   └──────────────────────┘
                                  │
                                  ▼
                              ( END )
```

# FIG. 15

## FIG. 16

```
        ┌─────────────────────────┐
        │   MUSIC PLAYING IN CASE │
        │    OF RADIO RECEPTION   │
        └─────────────────────────┘
                    │
                    ▼
        ┌─────────────────────────┐
        │    DISPLAY MUSIC LIST   │── S501
        │    OF MEMORY BUTTON     │
        └─────────────────────────┘
                    │
                    ▼
                                   S502
  NO        ╱─────────────────────╲
◄───────────   NECESSARY TO REARRANGE
            ╲          ?          ╱
  │          ╲───────────────────╱
  │                  │ YES
  │                  ▼           S503
  │       ╱─────────────────────────╲
  │ YES   │        ORDER OF          │
  │◄──────   HIGH PLAYED FREQUENCIES
  │       ╲            ?            ╱
  │        ╲─────────────────────╱
  │                  │ NO
  │                  ▼
  │  ┌──────────────────┐  ┌──────────────────┐
  │  │ REARRANGE IN ORDER│  │ REARRANGE IN ORDER│
  │  │ OF HIGH PLAYED    │  │ OF LOW PLAYED     │── S504
  │  │ FREQUENCIES       │  │ FREQUENCIES       │
  │  └──────────────────┘  └──────────────────┘
  │  S505          │                │
  │                └────────┬───────┘
  └─────────────────────────┤
                            ▼
                    ┌──────────────────┐
                    │  STORE IN MEMORY │── S506
                    └──────────────────┘
                            │
                            ▼
                    ┌──────────────────┐
                    │     RECEIVE      │── S507
                    │ BROADCAST PROGRAM│
                    └──────────────────┘
                            │
                            ▼
                ┌──────────────────────┐
                │ SEARCH FOR SIMILAR MUSIC│── S508
                └──────────────────────┘
                            │
                            ▼
                    ┌──────────────┐
                    │  CREATE LIST │── S509
                    └──────────────┘
                            │
                            ▼
                ┌──────────────────────┐
                │ PLAY IN MUSIC LIST ORDER│── S510
                └──────────────────────┘
                            │
                            ▼
                         ( END )
```